(19) Europäisches Patentamt
European Patent Office
Office européen des brevets

(11) **EP 3 781 952 B1**

(12) **FASCICULE DE BREVET EUROPEEN**

(45) Date de publication et mention
de la délivrance du brevet:
**16.10.2024 Bulletin 2024/42**

(21) Numéro de dépôt: **19718176.1**

(22) Date de dépôt: **19.04.2019**

(51) Classification Internationale des Brevets (IPC):
**G01P 5/24** *(2006.01)* **G01F 1/66** *(2022.01)*

(52) Classification Coopérative des Brevets (CPC):
**G01P 5/245; G01F 1/667; G01P 5/241**

(86) Numéro de dépôt international:
**PCT/EP2019/060218**

(87) Numéro de publication internationale:
**WO 2019/202139 (24.10.2019 Gazette 2019/43)**

(54) **ANEMOMETRE A ULTRASON**

ULTRASCHALLANEMOMETER

ULTRASONIC ANEMOMETER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.04.2018 FR 1853483**

(43) Date de publication de la demande:
**24.02.2021 Bulletin 2021/08**

(73) Titulaires:
• **Université du Mans
72000 Le Mans (FR)**
• **ASSOC TRANSFERTS TECHNOLOGIES MANS
72000 Le Mans (FR)**
• **CENTRE NATIONAL DE
LA RECHERCHE SCIENTIFIQUE -CNRS-
75016 Paris (FR)**

(72) Inventeurs:
• **EMERY, Jacques
72000 LE MANS (FR)**
• **TABELLOUT, Mohammed
72550 FAY (FR)**
• **MECHRI, Charfeddine
61000 ALENCON (FR)**

(74) Mandataire: **Cabinet Le Guen Maillet
3, impasse de la Vigie
CS 71840
35418 Saint-Malo Cedex (FR)**

(56) Documents cités:
DE-A1- 2 936 909    DE-B3- 102007 030 071
FR-A1- 2 472 755     JP-A- S57 108 625
US-A- 4 333 353      US-A1- 2014 130 606
US-B1- 6 487 916

EP 3 781 952 B1

**Description**

La présente invention concerne le domaine de la métrologie. La présente invention concerne plus particulièrement un anémomètre avantageusement adapté au domaine aéronautique.

Il est connu d'utiliser dans le domaine aéronautique des anémomètres connus sous les noms de tube de Pitot ou d'antenne de Prandtl.

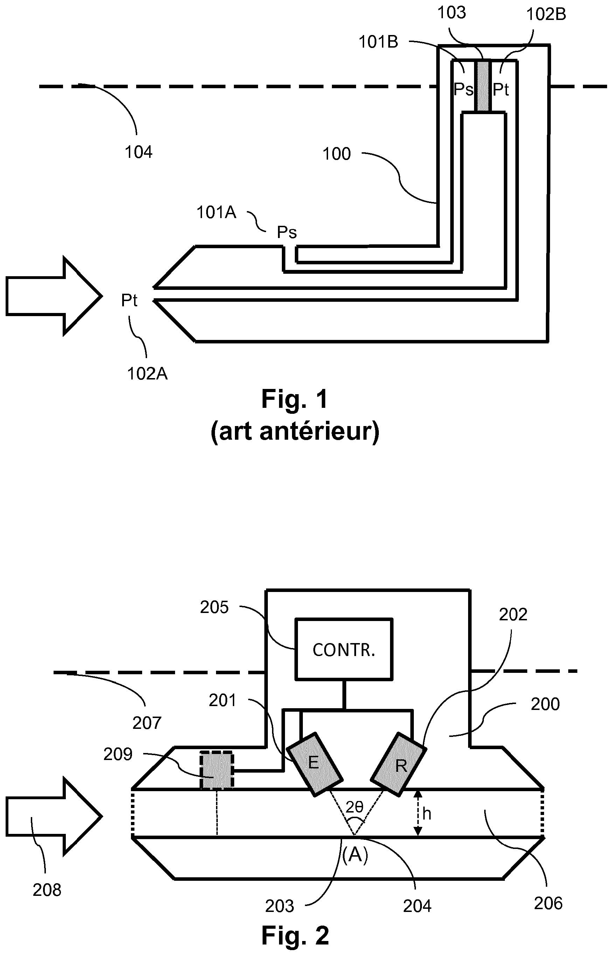

Un tel anémomètre 100, ci-après tube de Pitot, est illustré en Fig. 1. Le principe de fonctionnement d'un tube de Pitot est de mesurer, par exemple au moyen d'un manomètre différentiel 103, une différence de pression entre une pression Ps dite pression statique et une pression Pt, dite pression totale. La pression statique Ps correspond à la pression d'une chambre 101B reliée par un tube à une prise d'air 101A situé dans le corps du tube de Pitot 100. La prise d'air 101A est située perpendiculairement au sens d'écoulement du fluide, sens d'écoulement ici matérialisé par une flèche allant de la gauche vers la droite dans la Fig. 1. Cette pression statique Ps ne varie pas en fonction de la vitesse d'écoulement du fluide à mesurer. La pression totale Pt correspond à la pression d'une chambre 102B reliée par un tube à une prise d'air 102A située dans le corps du tube de Pitot 100. La prise d'air 102A est située face au sens d'écoulement du fluide. La pression totale Pt correspond à la somme de la pression statique Ps et d'une pression dite dynamique. La pression dynamique correspond à la pression causée par l'écoulement du fluide. La différence entre la pression totale Pt et la pression statique Ps correspond donc à la seule pression dynamique, pression dynamique qui est dépendante de la vitesse d'écoulement du fluide. Un tube de Pitot 100 est typiquement fixé sur le fuselage 104 d'un aéronef, selon une position adaptée au sens de déplacement de l'aéronef, afin de déterminer une vitesse d'écoulement de l'air autour de l'avion, ladite vitesse étant communément appelée vent relatif. La connaissance de cette vitesse vent relatif est primordiale pour un aéronef dont la sustentation est assurée par une force aérodynamique, la portance, produite à l'aide d'une voilure. En effet, sous une certaine vitesse, dite de décrochage, l'aéronef connaît une perte de portance pouvant mener à un accident.

Les tubes de Pitot ne peuvent plus fonctionner correctement si l'une ou l'autre des entrées d'air 101A ou 102A est obstruée. Ainsi la présence d'eau, la formation de glace ou une collision avec des corps étrangers (par exemple insectes ou oiseaux) peut obstruer l'une des entrées d'air. Le tube de Pitot donnera alors une mesure erronée du vent relatif, sans aucune indication que cette mesure est erronée. Par exemple, une obstruction de la prise d'air 102A donnera une mesure erronée, indiquant une vitesse vent relatif en augmentation lorsque l'avion prend seulement de l'altitude. En cas de mauvaises conditions météo, particulièrement avec un manque de visibilité, il peut être impossible pour un pilote de s'apercevoir que la mesure de vent relatif fournie par le tube de Pitot est incohérente, ce qui peut mener potentiellement à des situations dangereuses.

Il est donc nécessaire de proposer une solution permettant une mesure de la vitesse d'écoulement d'un fluide de manière fiable.

L'invention concerne un dispositif électronique de mesure d'une vitesse d'écoulement d'un fluide, le dispositif électronique comprenant :

- un premier transducteur électroacoustique, adapté pour émettre et/ou recevoir un signal acoustique selon un premier axe central,
- un deuxième transducteur électroacoustique, adapté pour émettre et/ou recevoir un signal acoustique selon un deuxième axe central, le premier axe central et le deuxième axe central définissant de façon unique un plan parallèle à la direction de l'écoulement du fluide à mesurer,
- une surface adaptée pour réfléchir un signal acoustique, la surface étant disposée à un point d'intersection du premier axe central et du deuxième axe central, chaque axe formant un même angle avec la droite orthogonale à la surface passant par le point d'intersection, chaque transducteur électroacoustique étant situé à une même distance de la surface,
- un module de contrôle des transducteurs électroacoustiques,

  le dispositif électronique étant adapté pour permettre un écoulement libre du fluide entre la surface et les deux transducteurs électroacoustiques, et,
  le dispositif électronique étant adapté pour :

  - émettre, via le premier transducteur électroacoustique, un premier signal acoustique,
  - recevoir, via le premier ou le deuxième transducteur électroacoustique, un deuxième signal acoustique correspondant à une ou plusieurs réflexions du premier signal acoustique,
  - déterminer, en fonction de la distance (h), de l'angle ($\theta$), du premier signal acoustique émis et du deuxième signal acoustique reçu une vitesse d'écoulement du fluide,

  le dispositif étant adapté pour déterminer la célérité C du son dans le fluide, le premier et le deuxième signal acoustique étant des signaux de type chirp émis selon une méthode de compression d'impulsions, et le dispositif comportant en outre :

  - des moyens pour déterminer une première vitesse d'écoulement $V_{n-1}$ en fonction d'une valeur initiale de la célérité $C_{n-1}$ égale à 340 m/s,

- des moyens pour corriger des bandes de fréquence du deuxième signal acoustique en tenant compte de la valeur précédemment déterminée de la vitesse d'écoulement $V_{n-1}$,
- des moyens pour déterminer une nouvelle valeur de la vitesse d'écoulement $V_n$ à partir de la détermination d'un temps de trajet dit aller $T^+$ d'un signal acoustique émis entre le premier transducteur électroacoustique et le deuxième transducteur électroacoustique via une réflexion sur la surface et d'un temps de trajet dit retour $T^-$ d'un signal acoustique émis entre le deuxième transducteur électroacoustique et le premier transducteur électroacoustique via une réflexion sur la surface,
- des moyens pour déterminer une nouvelle valeur de la célérité $C_n$ en fonction de la nouvelle valeur de la vitesse d'écoulement $V_n$,
- des moyens pour réitérer les corrections et les déterminations d'autres valeurs de vitesse d'écoulement $V_{n+1}$ et de célérité $C_{n+1}$, lorsque l'écart entre la nouvelle valeur de la célérité $C_n$ et la valeur précédemment identifiée de la célérité $C_{n-1}$ est supérieur à un seuil prédéfini.

Selon un mode de réalisation complémentaire de l'invention, chaque transducteur électroacoustique est un capteur ultrasonique sans contact opérant dans une gamme de fréquence de 250 kHz à 650 kHz.

Selon un mode de réalisation complémentaire de l'invention, le dispositif électronique est adapté pour :

- déterminer un premier temps de trajet dit aller ($T^+$) d'un signal acoustique entre le premier transducteur électroacoustique et le deuxième transducteur électroacoustique via une réflexion sur la surface,
- déterminer un deuxième temps de trajet dit retour ($T^-$) d'un signal acoustique entre le deuxième transducteur électroacoustique et le premier transducteur électroacoustique via une réflexion sur la surface,
- déterminer une vitesse (V) de l'écoulement du fluide selon la formule :

$$V = \frac{2h}{\sin(2\theta)}\left(\frac{1}{T^+} - \frac{1}{T^-}\right)$$

Selon un mode de réalisation complémentaire de l'invention, le dispositif électronique est adapté pour déterminer la célérité (C) du son dans le fluide selon la formule :

$$C = \frac{h}{cos\theta}\left(\frac{1}{T^-} + \frac{1}{T^+}\right)$$

Selon un mode de réalisation complémentaire de l'invention, le dispositif électronique comprend un troisième transducteur électroacoustique disposé perpendiculairement au sens d'écoulement du fluide, le dispositif électronique étant adapté pour déterminer une célérité (C) du son dans le fluide au moyen de ce troisième transducteur électroacoustique.

L'invention concerne également un dispositif électronique de mesure d'une vitesse d'écoulement d'un fluide, le dispositif électronique étant adapté pour déterminer la vitesse d'écoulement d'un fluide de manière similaire à l'un ou plusieurs des dispositifs électroniques décrits dans le présent document.

L'invention concerne également un procédé de détermination de la vitesse d'écoulement d'un fluide, le procédé étant exécuté par un dispositif électronique tel que décrit dans le présent document, le procédé comprenant les étapes de :

- émettre, via le premier transducteur électroacoustique, un premier signal acoustique,
- recevoir, via le premier ou le deuxième transducteur électroacoustique, un deuxième signal acoustique correspondant à une ou plusieurs réflexions du premier signal acoustique,
- déterminer, en fonction de la distance (h), de l'angle ($\theta$), du premier signal acoustique émis et du deuxième signal acoustique reçu une vitesse,
- déterminer une première vitesse d'écoulement $V_{n-1}$ en fonction d'une valeur initiale de la célérité $C_{n-1}$ égale à 340 m/s,
- corriger des bandes de fréquence du deuxième signal acoustique en tenant compte de la valeur précédemment déterminée de la vitesse d'écoulement $V_{n-1}$,
- déterminer une nouvelle valeur de la vitesse d'écoulement $V_n$ à partir de la détermination d'un temps de trajet dit aller $T^+$ d'un signal acoustique émis entre le premier transducteur électroacoustique et le deuxième transducteur électroacoustique via une réflexion sur la surface et d'un temps de trajet dit retour $T^-$ d'un signal acoustique émis entre le deuxième transducteur électroacoustique et le premier transducteur électroacoustique via une réflexion sur la surface,
- déterminer une nouvelle valeur de la célérité $C_n$ en fonction de la nouvelle valeur de la vitesse d'écoulement $V_n$,
- réitérer les corrections et les déterminations d'autres valeurs de vitesse d'écoulement $V_{n+1}$ et de célérité $C_{n+1}$, lorsque l'écart entre la nouvelle valeur de la célérité $C_n$ et la valeur précédemment identifiée de la célérité $C_{n-1}$ est supérieur à un seuil prédéfini.

L'invention concerne également un programme d'ordinateur, qui peut être stocké sur un support et/ou téléchargé d'un réseau de communication, afin d'être lu par un processeur d'un dispositif électronique. Ce programme d'ordinateur comprend des instructions pour implémenter tout ou partie des étapes du procédé de mesure d'une vitesse d'un écoulement d'un fluide, lorsque ledit programme est exécuté par le processeur.

L'invention concerne également un medium de stockage d'informations ou support d'enregistrement, lisible par un dispositif électronique, comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement un tube de Pitot tel que connu de l'homme du métier,
- la **Fig. 2** illustre schématiquement un dispositif électronique adapté pour mesurer une vitesse d'écoulement d'un fluide selon un mode de réalisation de l'invention,
- la **Fig. 3** illustre schématiquement une architecture matérielle d'un dispositif électronique adapté pour mesurer une vitesse d'écoulement d'un fluide selon un mode de réalisation de l'invention,
- la **Fig. 4** illustre schématiquement une architecture matérielle d'un dispositif électronique adapté pour mesurer une vitesse d'écoulement d'un fluide selon un mode de réalisation alternatif de l'invention.

La **Fig. 1** illustrant schématiquement un tube de Pitot tel que connu de l'homme du métier a été décrite précédemment. Des anémomètres fonctionnant selon le principe d'un tel tube de Pitot équipent la majorité des aéronefs aujourd'hui, avec les inconvénients présentés de vulnérabilité face à des conditions météorologiques particulières.

La **Fig. 2** illustre schématiquement un dispositif électronique 200 adapté pour mesurer une vitesse d'écoulement d'un fluide selon un mode de réalisation de l'invention.

Le dispositif électronique 200 comprend un premier transducteur électroacoustique E 201, adapté pour émettre ou recevoir un signal acoustique selon un premier axe central, et un deuxième transducteur électroacoustique R 202, adapté pour émettre ou recevoir un signal acoustique selon un deuxième axe central. Le premier axe central et le deuxième axe central définissent de façon unique un plan parallèle à la direction de l'écoulement du fluide à mesurer (c'est-à-dire le plan de la feuille dans le cas de la Fig. 2). Le dispositif électronique 200 comprend une surface 203 adaptée pour réfléchir un signal acoustique. La surface est disposée à un point d'intersection A 204 du premier axe central et du deuxième axe central, chaque axe formant un même angle θ

avec la droite orthogonale à la surface passant par le point d'intersection, chaque transducteur électroacoustique étant situé à une même distance « h » de la surface 203.

Le dispositif électronique 200 permet de réaliser des mesures non-intrusives. Autrement dit, la mesure de la vitesse de l'écoulement d'un fluide sera faite sans perturber l'écoulement de ce fluide. L'angle d'incidence des capteurs, c'est à dire l'angle « θ », est choisi de manière à maximiser l'interaction avec l'écoulement du fluide, cette interaction étant proportionnelle à *sin(θ)* et minimiser les perturbations aéro-acoustiques, ces perturbations étant générées par le dépassement des transducteurs électroacoustiques pour des angles d'incidence importants. Le dispositif électronique 200 est par exemple conçu selon un angle θ = 24°, angle choisi comme compromis pour satisfaire à ces deux contraintes antagonistes.

Un transducteur électroacoustique est un dispositif adapté pour convertir un signal électrique en un signal acoustique et pour convertir un signal acoustique en un signal électrique. Par convention ci-après dans le présent document, on parle d'émission pour un transducteur électroacoustique lorsque celui-ci convertit un signal électrique en un signal acoustique, le signal émis étant le signal acoustique. De même, on parle de réception pour un transducteur électroacoustique lorsque celui-ci convertit un signal acoustique en un signal électrique, le signal reçu étant le signal acoustique, lequel signal acoustique est ensuite converti pour être transmis au module de contrôle 205 sous forme d'un signal électrique.

Dit autrement, comme illustré dans la Fig. 2, le dispositif électronique 200 comprend deux transducteurs électroacoustiques E et R disposés de manière à ce que tout signal acoustique émis par l'un des deux transducteurs électroacoustiques E ou R soit reçu par l'autre transducteur électroacoustique E ou R après une réflexion sur la surface 203. Pour cela, la surface 204 est possiblement plane, du moins sur une superficie adaptée pour réfléchir au mieux un signal acoustique entre les deux transducteurs électroacoustiques E et R. La surface 204 comprend le point d'intersection des deux axes centraux d'émission des transducteurs électroacoustiques, chaque transducteur E et R voyant la surface sous le même angle θ par rapport à l'orthogonale à la surface 203 passant par le point d'intersection A.

Le dispositif électronique 200 comprend un module de contrôle 205 des transducteurs acoustiques E et R. Le module de contrôle 205 est adapté pour mettre en oeuvre un procédé de mesure d'une vitesse d'écoulement d'un fluide.

Le module de contrôle 205 est adapté pour émettre un signal électrique vers le transducteur électroacoustique E ou R, ledit signal électrique étant transformé par le transducteur électroacoustique E ou R en un signal acoustique. Le module de contrôle 205 est adapté pour recevoir du transducteur électroacoustique E ou R un signal électrique correspondant à la réception, et transformation, d'un signal acoustique par ledit transducteur électroacoustique E ou R.

Dans la Fig. 2, le sens d'écoulement du fluide mesuré correspond à la flèche allant de la gauche vers la droite. Il est à noter que le dispositif électronique 200 est aussi adapté pour mesurer un sens d'écoulement opposé, c'est-à-dire allant de la droite vers la gauche, sans devoir modifier le dispositif électronique. Dans le cas d'un fluide s'écoulant suivant une direction différente, le dispositif électronique 200 est adapté pour mesurer la composante de la vitesse d'écoulement selon la direction de mesure indiquée sur la Fig. 2 par la flèche.

La distance « h » sépare les deux transducteurs électroacoustiques E et R de la surface réfléchissante 203. Le dispositif électronique, en particulier par le choix de la distance h, est adapté pour permettre un écoulement libre du fluide dont la vitesse d'écoulement est à mesurer entre la surface et les deux transducteurs E et R. Par écoulement libre, on entend que la vitesse d'écoulement du fluide n'est pas perturbée, ou possiblement de façon non significative, par la présence du dispositif électronique.

Selon un mode de réalisation de l'invention illustré dans la Fig. 2, les deux transducteurs électroacoustiques E et R sont situés de manière à ce que leurs extrémités soient à fleur de la surface d'un tube creux 206 de diamètre h, le point A étant situé sur l'intérieur de la surface de ce tube creux. La surface 203 peut localement être aplatie afin d'améliorer la réflexion d'un signal acoustique.

Selon un mode de réalisation alternatif, une surface 203 est positionnée par tout moyen en face des transducteurs électroacoustiques E et R, de manière à comprendre le point A et à réfléchir au mieux tout signal acoustique émis par l'un des transducteurs électroacoustiques vers l'autre transducteur électroacoustique.

La surface 203 est possiblement la surface d'un élément métallique bénéficiant d'un traitement de surface, par exemple d'un polissage. La surface 203 est adaptée pour réfléchir au mieux tout signal acoustique émis par l'un des deux transducteurs électroacoustiques E ou R vers l'autre transducteur électroacoustique R ou E. La surface 203 est possiblement une surface plane, mais peut aussi être adaptée afin de maximiser la réflexion d'un signal acoustique de l'un des deux transducteurs électroacoustiques E ou R vers l'autre transducteur électroacoustique R ou E.

Le dispositif électronique 200 est adapté pour émettre, via le premier transducteur électroacoustique E 201, un premier signal acoustique. Le module de contrôle 205 est adapté pour contrôler cette émission du premier signal acoustique. Le dispositif électronique 200 est ensuite adapté pour recevoir, via le même premier transducteur électroacoustique E 201, un signal acoustique correspondant à la réflexion du premier signal acoustique contre le deuxième transducteur électroacoustique R 202, via deux réflexions sur la surface 203, et déterminer un délai dit de référence entre le moment de ladite réception et le moment d'émission du premier signal acoustique. Dit autrement, le dispositif électronique 200 est adapté pour mesurer le délai, dit délai de référence, d'un trajet d'un signal acoustique émis par un transducteur électroacoustique, réfléchi sur la surface 203, réfléchi par le transducteur électroacoustique R 202, réfléchi une nouvelle fois par la surface 203 puis reçu par le transducteur électroacoustique E 201. Dit autrement, le dispositif électronique 200 est adapté pour mesurer le délai de propagation d'un signal acoustique faisant un trajet aller-retour entre le transducteur électroacoustique E et le transducteur électroacoustique R.

En notant E-A le trajet d'un signal acoustique entre le transducteur électroacoustique E et le point d'intersection A et A-R, le trajet acoustique entre le point d'intersection A et le transducteur électroacoustique R, le dispositif électronique 200 est donc adapté pour mesurer le délai de propagation acoustique $T^+$ d'un signal acoustique faisait le trajet aller E-A-R. Le dispositif électronique 200 est également adapté pour mesurer le délai de propagation acoustique $T^-$ d'un signal acoustique faisait le trajet retour R-A-E.

Dans l'hypothèse où le sens d'écoulement du fluide est de la gauche vers la droite, c'est-à-dire celui matérialisé par la flèche 208 dans la Fig. 2, alors la vitesse du signal acoustique pour aller du transducteur électroacoustique E vers le point A, et pour aller du point A vers le transducteur électroacoustique R, est supérieure à la vitesse du même signal acoustique en l'absence d'écoulement du fluide. Dit autrement, le délai ou temps de parcours $T^+$ du trajet E-A-R est réduit en présence d'un écoulement du fluide (selon le sens de la flèche 208) par rapport à une situation sans écoulement du fluide. Plus généralement, la vitesse du signal acoustique pour aller du transducteur électroacoustique E vers le point A, et pour aller du point A vers le transducteur électroacoustique R, est d'autant plus grande que la vitesse de l'écoulement du fluide est grande.

De même, dans la même hypothèse, la vitesse du signal acoustique pour aller du transducteur électroacoustique R vers le point A, et pour aller du point A vers le transducteur électroacoustique E, est inférieure à la vitesse du même signal acoustique en l'absence d'écoulement du fluide. Dit autrement, le délai ou temps de parcours $T^-$ du trajet R-A-E est augmenté en présence d'un écoulement du fluide (selon le sens de la flèche 208) par rapport à une situation sans écoulement du fluide. Plus généralement, la vitesse du signal acoustique pour aller du transducteur électroacoustique R vers le point A, et pour aller du point A vers le transducteur électroacoustique E, est d'autant plus petite que la vitesse de l'écoulement du fluide est grande.

Les temps de parcours des signaux acoustiques se propageant dans le sens E-A-R correspondant à $T^+$ et R-A-E correspondant à $T^-$ s'expriment ainsi :

$$T^+ = \left(\frac{2h}{\cos\theta}\right) \cdot \left(\frac{1}{C + V\sin\theta}\right)$$

$$T^- = \left(\frac{2h}{\cos\theta}\right) \cdot \left(\frac{1}{C - V\sin\theta}\right)$$

Avec :

C : célérité d'un signal acoustique (ou vitesse du son) dans le fluide aux conditions de température, pression et densité,

V : vitesse de l'écoulement du fluide,

h : distance entre les transducteurs électroacoustiques et la surface,

$\cos(\theta)$ : fonction « cosinus de l'angle $\theta$ »,

$\sin(\theta)$ : fonction « sinus de l'angle $\theta$ ».

« h » et « $\theta$ » sont prédéterminés, « V » est la vitesse de l'écoulement du fluide que l'anémomètre est amené *in fine* à déterminer.

La célérité C du signal acoustique pouvant varier en fonction des conditions de température, de pression ou densité du fluide, et étant connue la distance aller-retour RA-E-A-R (fonction de l'angle « $\theta$ » et de la distance « h »), il est ainsi possible de déterminer la célérité du signal acoustique par une simple mesure du temps de trajet aller-retour R-A-E-A-R ($T^+ + T^-$) (ou délai de référence). Dit autrement, il est possible d'étalonner le dispositif électronique 200 par une mesure, dite mesure d'étalonnage, du temps de trajet aller-retour (ou délai de référence).

Avantageusement, le dispositif électronique 200 peut donc se passer d'éléments permettant une mesure de la température, pression ou densité du fluide. Cela réduit l'encombrement, le poids, la complexité du dispositif électronique 200. Cela augmente d'autant la fiabilité du dispositif électronique 200. En effet, l'opération d'étalonnage est fiabilisée car ne recourant pas à une ou plusieurs mesures de température, pression ou densité, laquelle ou lesquelles mesures pouvant être erronées. Le dispositif électronique 200 est ainsi adapté pour déterminer, en fonction de la distance « h », du délai de référence (ou temps de trajet aller-retour R-A-E-A-R) et de l'angle $\theta$, une vitesse du signal acoustique (dit autrement, du son) « C » dite de référence dans le fluide. Ladite vitesse du son dans le fluide est appelée célérité « C ».

Il est à noter que le temps de trajet aller-retour R-A-E-A-R est égal au temps de trajet aller-retour E-A-R-A-E, l'influence de l'écoulement du fluide étant *in fine* neutre dans les deux cas.

La célérité C peut s'exprimer ainsi :

$$c = \frac{h}{\cos\theta}\left(\frac{1}{T^-} + \frac{1}{T^+}\right)$$

Avec :

C : célérité d'un signal acoustique (ou vitesse du son) dans le fluide aux conditions de température, pression et densité,

h : distance entre les transducteurs électroacoustiques et la surface,

$T^+$ : temps du trajet aller E-A-R,

$T^-$ : temps du trajet retour R-A-E,

$\cos(\theta)$ : fonction « cosinus de l'angle $\theta$ ».

h et $\theta$ sont prédéterminés.

Avantageusement la distance « h » est prédéterminée afin de réduire l'encombrement du dispositif électronique 200.

Avantageusement, la célérité « C » du signal acoustique peut être rapidement et aisément déterminée, et ainsi être mise à jour, lorsque les conditions de températures, pression et/ou densité évoluent.

Selon un mode de réalisation de l'invention, le dispositif électronique 200 exécute périodiquement une mesure d'étalonnage (par exemple toutes les 10 millisecondes) et enregistre ainsi dans une mémoire une valeur de C régulièrement mise à jour.

Selon un mode de réalisation alternatif de l'invention, la mise en place optionnelle d'un troisième transducteur électroacoustique 209 à incidence normale avec l'axe de l'écoulement du fluide, permet une détermination instantanée de la célérité « C » dans le milieu aux conditions réelles de température, humidité et pression. Le trajet de l'onde acoustique émise par le troisième transducteur électroacoustique 209 étant orthogonal à la direction de l'écoulement, la vitesse mesurée est ainsi indépendante de la vitesse du fluide en mouvement.

Le dispositif électronique 200 est adapté pour émettre un signal acoustique via le transducteur acoustique E. Ce signal est reçu par le transducteur électroacoustique R après une première réflexion sur la surface 203 (point A). Arrivé au transducteur électroacoustique R, ce signal acoustique est réfléchi par la surface du transducteur électroacoustique R et fait le trajet inverse R-A-E vers le transducteur électroacoustique E via une réflexion sur la surface 203. La durée de ce trajet est la durée T' précédemment définie. Arrivé au transducteur électroacoustique E, ce signal est réfléchi par la surface du transducteur électroacoustique E et fait, de nouveau, le trajet inverse E-A-R vers le transducteur électroacoustique R via une réflexion sur la surface 203. La durée de ce trajet est la durée $T^+$ précédemment définie. Autrement dit, après une émission du signal acoustique par le transducteur électroacoustique E et sa réception par le transducteur électroacoustique R, le système d'acquisition observe un aller-retour R-A-E-A-R et contrôle les temps d'arrivée du signal acoustique au transducteur électroacoustique R, puis au transducteur électroacoustique E et de nouveau au transducteur électroacoustique R. Autrement dit, après émission du signal acoustique à partir du transducteur électroacoustique E, le dispositif électronique 200 détermine la mesure dès l'arrivée du signal acoustique sur le transducteur électroacoustique R (instant « $t_1$ »), ensuite le dispositif électronique 200détermine le temps d'arrivée du signal acoustique réfléchi sur le transducteur électroacoustique E (l'instant « $t_2$ ») et finalement le dispositif électronique 200 détermine le temps d'arrivée du signal acoustique, à nouveau réfléchi, sur le transducteur électroacoustique R (instant « $t_3$ »). La durée du trajet R-A-E est « $T^-=t_2-t_1$ » et la durée du trajet E-A-R est « $T^+=t_3-t_2$ ». Le dispositif électronique 200 est ainsi adapté pour déterminer la vitesse du son de référence C, et la vitesse d'écoulement du fluide en fonction des temps de trajet $T^+$ et $T^-$.

Pour cela, le dispositif électronique 200 peut mettre en oeuvre l'un ou l'autre des procédés suivants :

(A) mesure de la vitesse d'écoulement du fluide par mesure d'un temps de parcours d'un signal acoustique,
(B) mesure de la vitesse d'écoulement du fluide par mesure d'un effet Doppler,
(C) mesure de la vitesse d'écoulement du fluide par mesure d'une fréquence de battements.

Les procédés (B) et (C) sont des modes de réalisation qui ne font pas partie de l'invention mais représentent des éléments de l'état de la technique utiles à la compréhension de l'invention.

Cas du procédé (A) : mesure d'un temps de parcours

Les temps de parcours $T^+$ correspondant à un trajet E-A-R et $T^-$ correspondant à un trajet R-A-E peuvent s'exprimer ainsi :

$$T^+ = \left(\frac{2h}{\cos\theta}\right) \cdot \left(\frac{1}{C+V sin\theta}\right)$$

$$T^- = \left(\frac{2h}{\cos\theta}\right) \cdot \left(\frac{1}{C-V sin\theta}\right)$$

Avec :

$T^+/T^-$ : temps de parcours d'un trajet aller E-A-R/R-A-E, ces temps de parcours sont mesurés par le dispositif électronique 200,
h : distance entre les transducteurs électroacoustiques (E et R) et la surface 203,
$\cos(\theta)$ : fonction « cosinus de l'angle $\theta$ »,
$\sin(\theta)$ : fonction « sinus de l'angle $\theta$ »,
C : célérité du son dans le fluide, la célérité est déterminée lors d'une mesure d'étalonnage comme expliqué précédemment,
V : vitesse de l'écoulement du fluide (ou du moins, sa composante selon la direction de mesure définie par la flèche 208 dans la Fig. 2). La vitesse « V » ainsi déterminée est une grandeur algébrique positive ou négative selon le sens de l'écoulement.

Tous les paramètres étant connus à l'exception de « V », vitesse de l'écoulement du fluide, il est donc possible de déterminer la vitesse « V » d'écoulement du fluide à partir d'une mesure des temps de parcours $T^+$ et $T^-$.

La vitesse de l'écoulement « V » est alors déduite comme suit :

$$V = \frac{2h}{\sin(2\theta)}\left(\frac{1}{T^+} - \frac{1}{T^-}\right)$$

Le deuxième signal acoustique est un signal dit de type « chirp », émis selon une méthode de compression d'impulsion.

La méthode de compression d'impulsion repose sur un principe de modulation linéaire de fréquence. Elle permet d'améliorer le Rapport Signal sur Bruit (RSB, ou SNR pour « *signal to noise ratio* » en anglais) lors de mesures échographiques en établissant une reconnaissance d'un motif fréquentiel (ou « *pattern* » en anglais) du signal acoustique dans le temps. Cependant, les performances de cette technique se dégradent notablement dans le cas d'une propagation qui affecte ce contenu fréquentiel (dispersion, effet Doppler). En l'occurrence, les impulsions envoyées par le transducteur électroacoustique E 201 peuvent être des « Chirp » dans la bande fréquentielle de 250 kHz à 650 kHz. Subissant un effet Doppler provoqué par un écoulement d'un fluide, ces impulsions « chirp » ont un contenu fréquentiel après propagation modifié. Ainsi, par exemple, dans un écoulement d'un fluide à Mach 0.8 (c'est-à-dire à 0.8 fois la vitesse du son dans l'air), le contenu fréquentiel du motif fréquentiel de 250 kHz à 650 kHz est modifié et est décalé dans une bande fréquentielle de 180 kHz à 460 kHz. De plus, toujours sous l'effet de l'écoulement du fluide, la durée du motif fréquentiel change. Ainsi, le maximum d'une fonction d'intercorrélation entre le signal acoustique émis et un signal acoustique reçu baisse d'un facteur de 40 dB, ce qui rend plus compliqué la détection d'une impulsion réfléchie lorsqu'un fluide s'écoule à haute vitesse.

Afin de corriger cette possible imprécision, et selon l'invention, il est possible d'implémenter un algorithme considérant tout d'abord une valeur initiale « $C_0$ » de la vitesse du son égale à « $C_0$=340 m/s » dans le milieu. Cette valeur initiale de vitesse du son, combinée au décalage fréquentiel mesuré par effet Doppler permet alors de déterminer une première valeur $V_0$ de la vitesse de l'écoulement. Ces deux données ($C_0$ et $V_0$) sont par la suite utilisées pour corriger les bandes de fréquence reçues par la méthode de compression d'impulsion. Cette dernière permet d'extraire $T^+$ et $T^-$ et de remonter ainsi à une estimation plus précise. Il est ainsi possible de déterminer un deuxième jeu de valeurs $C_1$ et $V_1$ à partir

de $C_0$ et $V_0$. Si l'écart entre la valeur initiale $C_0$ et la valeur affinée Ci dépasse un seuil prédéterminé (par exemple un pour cent), on réinjecte comme nouvelle valeur initiale de la vitesse la valeur Ci et la procédure est réitérée « n » fois jusqu'à ce que la différence entre les vitesses $C_n$ et $C_{n-1}$ soit inférieure au seuil prédéterminé. Autrement dit, partant d'une valeur approximative de la vitesse du son dans le milieu, des boucles d'itération vont affiner cette mesure de vitesse en estimant dans un premier temps la vitesse d'écoulement :

$$V_0 = (C_0 / \sin(\theta)).(f_d-f_e) / f_d,$$

$f_d$ et $f_e$ étant décrits ci-après dans la description du cas B.

Cette vitesse d'écoulement servira ensuite à estimer les changements de l'intervalle de fréquence du chirp ainsi que sa durée et donc d'en améliorer la résolution. A la n-ième itération, le chirp fournit une nouvelle estimation plus fiable de la vitesse de l'écoulement V (notée $V_n$) et de la vitesse du son dans le milieu C (notée $C_n$). Si la valeur de $C_n$ s'écarte significativement (c'est-à-dire de plus d'un certain pourcentage prédéterminé, par exemple un pour cent) de la valeur $C_{n-1}$ la boucle est relancée à partir des nouvelles valeurs de $C_n$ et $V_n$.

Le signal acoustique est ainsi avantageusement un signal de type chirp linéaire en fréquence sur une gamme de fréquence de 250 kHz à 650 kHz. Le dispositif électronique 200 peut alors déterminer une intercorrélation entre le signal acoustique émis par le transducteur électroacoustique E et les signaux réfléchis reçus par les transducteurs électroacoustiques E et R afin d'obtenir une mesure précise du temps de trajet $T^+$ correspondant aller E-A-R et du temps de trajet $T^-$ correspondant aller R-A-E.

Cas du procédé (B) : mesure de la vitesse d'écoulement du fluide par mesure d'un effet Doppler

Pour ce procédé (B), le signal acoustique émis par le transducteur acoustique E est avantageusement un signal harmonique mono-fréquentiel avec une enveloppe gaussienne. Selon le type de transducteur électroacoustique utilisé, une fréquence optimale peut être 380 kHz.

Le procédé (B) utilise l'effet Doppler affectant le signal acoustique lors de son trajet aller E-A-R. En effet, plus la vitesse de l'écoulement du fluide est grande, plus un décalage en fréquence - vers les basses fréquences pour un écoulement de la gauche vers la droite - existe entre le signal acoustique émis par le transducteur électroacoustique E et le signal acoustique reçu par le transducteur électroacoustique R.

Le dispositif électronique 200 est ainsi adapté pour déterminer, en fonction de la vitesse du son de référence précédemment déterminée (la célérité C), du signal acoustique (émis par le transducteur électroacoustique E) et du signal acoustique réfléchi (reçu par le transducteur électroacoustique R après une réflexion sur la surface 203), la vitesse d'écoulement V du fluide selon la formule :

$$V = \frac{C}{\sin(\theta)} \cdot \frac{(fd - fe)}{fd}$$

Avec :

$f_e$ : fréquence du signal acoustique mono-fréquentiel émis par le transducteur électroacoustique E, possiblement déterminée par une transformée de Fourier rapide (FFT) du signal acoustique émis,

$f_d$ : fréquence du signal mono-fréquentiel reçu par le transducteur électroacoustique R, possiblement déterminée par une transformée de Fourier rapide (FFT) du signal acoustique reçu,

$\sin(\theta)$ : fonction « sinus de l'angle $\theta$ »,

C : célérité du son dans le fluide, la célérité est déterminée lors d'une mesure d'étalonnage comme expliqué précédemment,

V : vitesse de l'écoulement du fluide (ou du moins, sa composante selon la direction de mesure définie par la flèche dans la Fig. 2).

Selon le mode de réalisation de l'invention, la valeur de la célérité C utilisée dans ce procédé B peut être déterminée soit en utilisant le procédé A décrit précédemment, soit à l'aide du troisième transducteur électroacoustique 209 disposé perpendiculairement au sens d'écoulement du fluide.

Cas du procédé (C) : mesure de la vitesse d'écoulement du fluide par mesure d'une fréquence de battements

Pour ce procédé (C), le signal acoustique est avantageusement un signal acoustique harmonique mono-fréquentiel. Il s'agit d'un signal acoustique intermittent dit « burst » qui consiste en un train d'impulsions sinusoïdales (typiquement 700 impulsions). Selon le type de transducteur électroacoustique utilisé, une fréquence optimale peut être 380 kHz.

Le dispositif électronique 200 est ainsi adapté pour déterminer, en fonction de la vitesse du son de référence précédemment déterminée (la célérité C), du deuxième signal acoustique (émis par le transducteur électroacoustique E) et du signal acoustique réfléchi (reçu par le transducteur électroacoustique R après une réflexion sur la surface 203), la vitesse d'écoulement du fluide en réalisant une sommation de deuxième signal acoustique et du signal acoustique reçu. La sommation de ces deux signaux acoustiques (du moins, leurs représentations électriques utilisées par le module de contrôle 205) fait apparaître un signal modulé en amplitude (ou battement). La mesure de la fréquence de modulation permet d'en déduire une différence de fréquence, et conséquemment une vitesse de l'écoulement du fluide.

Selon le mode de réalisation de l'invention, la valeur de la célérité C utilisée dans ce procédé C peut être déterminée soit en utilisant le procédé A décrit précédemment, soit à l'aide du troisième transducteur électroacoustique 209 disposé perpendiculairement au sens d'écoulement du fluide.

Avantageusement, le dispositif électronique 200 est adapté pour exécuter l'un ou l'autre des procédés (A), (B) ou (C) afin de déterminer la vitesse de l'écoulement du fluide. Avantageusement, le dispositif électronique 200 peut exécuter chaque procédé (A), (B) ou (C) périodiquement afin d'obtenir une mesure de la vitesse de l'écoulement du fluide par des procédés différents. Avantageusement, la fiabilité du dispositif électronique 200 est ainsi renforcée. En effet, il se peut que selon les conditions d'utilisation du dispositif électronique 200 l'un ou l'autre des procédés (A), (B) ou (C) donne un résultat erroné. Disposer de mesures provenant de trois procédés différents permet donc l'élimination d'une mesure qui paraîtrait incohérente par rapport aux deux autres mesures.

Avantageusement, pour une mise en oeuvre de l'invention permettant des mesures de vitesses jusqu'à plus de 84 m/s, les transducteurs électroacoustiques E et R sont des capteurs ultrasoniques sans contact (ou NCU pour « *Non Contact Ultrasonic* » en anglais) fonctionnant dans une gamme de fréquence de 250 kHz à 650 kHz, par exemple aux alentours de 400 kHz.

Avantageusement, ces capteurs ultrasoniques disposent d'une large gamme fréquentielle, ce qui autorise une mise en oeuvre efficace des procédés de mesure (A), (B) et (C).

Avantageusement, le transducteur électroacoustique E et/ou R est dit « à couplage aérien ». Le transducteur électroacoustique E et/ou R comprend alors un traitement surface (par exemple une couche de polymère) devant le transducteur, ledit traitement de surface permettant une adaptation d'impédance acoustique entre le transducteur électroacoustique et le fluide.

Le fluide considéré peut être un fluide dit « léger », c'est-à-dire un gaz, ou bien un fluide dit « lourd », c'est-à-dire un liquide. Dans le cas d'une utilisation du dispositif électronique en tant qu'anémomètre pour un aéronef, le fluide considéré est de l'air.

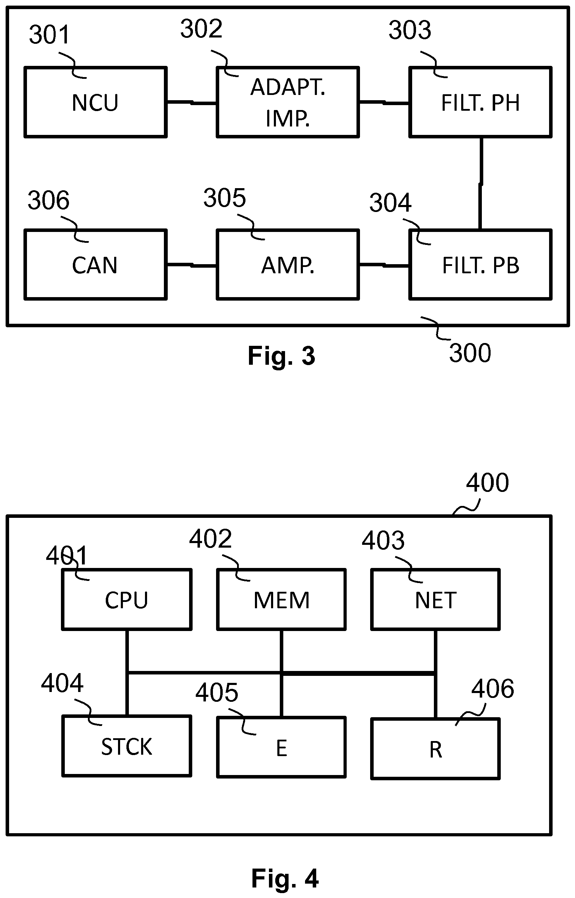

La **Fig. 3** illustre schématiquement une architecture matérielle d'un dispositif électronique 300 adapté pour mesurer une vitesse d'écoulement d'un fluide selon un mode de réalisation de l'invention. Le dispositif électronique 300 est typiquement le dispositif électronique 200 de la Fig. 2.

Le module 301 est un transducteur de type NCU opérant à une fréquence de travail de 400 kHz. Le module 301 permet une conversion d'un signal acoustique en entrée (non représentée) vers un signal électrique, lequel signal électrique étant transmis aux modules 302 et suivants pour traitement.

Le module 302 est un amplificateur de charge permettant une adaptation d'impédance entre le transducteur (module 301) et le module 303.

Le module 303 est un filtre passe-haut. Le module 303 est typiquement un filtre passe-haut passif du 4e ordre avec une fréquence de coupure autour de 10 kHz. Ce module 303 permet de filtrer les fréquences perturbatrices basses-fréquences engendrées par l'écoulement du fluide. En effet, l'écoulement engendre des pressions acoustiques de basses fréquences.

Le module 304 est un filtre passe-bas. Le module 304 est typiquement un filtre anti-aliasing à 2.5 MHz.

Le module 305 est un amplificateur. Le signal électrique est typiquement amplifié afin d'adapter l'amplitude du signal électrique au module de conversion analogique-numérique 306 suivant. L'amplification est typiquement de 20 dB.

Le module 306 est un module d'acquisition, permettant une conversion du signal électrique analogique en un signal numérique. Le module d'acquisition permet typiquement un échantillonnage sur 16 bits à 5 MS/s.

La **Fig. 4** illustre schématiquement une architecture matérielle d'un dispositif électronique 400 adapté pour mesurer une vitesse d'écoulement d'un fluide selon un mode de réalisation alternatif de l'invention.

Le dispositif électronique 400 correspond par exemple au dispositif électronique 200 de la Fig. 2.

Le dispositif électronique 400 comporte, reliés par un bus de communication : un processeur ou CPU (« *Central Processing Unit* » en anglais) 401 ; une mémoire MEM 402 de type RAM (« *Random Access Memory* » en anglais) et/ou ROM (« *Read Only Memory* » en anglais), un module réseau NET 403, un module de stockage STCK 404 de type stockage interne. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402, dans le module de stockage STCK 404 ou encore dans une base de données. Ces données peuvent correspondre à des paramètres de configuration. Le module réseau NET 303 permet la connexion du dispositif électronique 400 à un réseau de communication, par exemple à un réseau d'un système embarqué d'un aéronef. Le module réseau NET 403 permet au dispositif électronique 400 d'envoyer, respectivement de recevoir, des messages à destination de, respectivement en provenance de un ou plusieurs équipements d'un système avionique.

Le processeur CPU 401 est capable d'exécuter des instructions chargées dans la mémoire MEM 402, par exemple à partir du module de stockage STCK 404 ou d'un réseau de communication via le module réseau NET 403. Lorsque le dispositif électronique 400 est mis sous tension, le processeur CPU 401 est capable de lire de la mémoire MEM 402 des instructions et de les exécuter. Ces instructions forment un programme d'ordinateur causant la mise en oeuvre, par le processeur CPU 401, de tout ou partie des procédés et étapes décrits ci-avant, particulièrement dans la description de la Fig. 2. Ces instructions peuvent correspondre au procédé d'étalonnage et/ou au procédé (A), (B) et/ou (C) précédemment décrits. Ainsi, tout ou partie des procédés et étapes décrits ci-avant peut être implémenté sous forme logicielle par exécution d'un ensemble d'instructions par une machine programmable, telle qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array* » en anglais) ou un ASIC (« *Application-Specific Integrated Circuit* » en anglais).

Avantageusement, le dispositif électronique 200, 300, 400 comprend un système de fixation pour fixer ledit dispositif électronique à un fuselage d'un aéronef.

## Revendications

1. Dispositif électronique (200) de mesure d'une vitesse d'écoulement (V) d'un fluide, le dispositif électronique comprenant :

   - un premier transducteur électroacoustique (E), adapté pour émettre et/ou recevoir un signal acoustique selon un premier axe central,
   - un deuxième transducteur électroacoustique (R), adapté pour émettre et/ou recevoir un signal acoustique selon un deuxième axe central, le premier axe central et le deuxième axe central définissant de façon unique un plan parallèle à la direction de l'écoulement du fluide à mesurer,
   - une surface (203) adaptée pour réfléchir un signal acoustique, la surface étant disposée à un point d'intersection (A) du premier axe central et du deuxième axe central, chaque axe formant un même angle ($\theta$) avec la droite orthogonale à la surface passant par le point d'intersection, chaque transducteur électroacoustique étant situé à une même distance (h) de la surface,
   - un module de contrôle (205) des transducteurs électroacoustiques,

   le dispositif électronique étant adapté pour permettre un écoulement libre du fluide entre la surface et les deux transducteurs électroacoustiques,
   le dispositif électronique étant adapté pour :

   - émettre, via le premier transducteur électroacoustique, un premier signal acoustique,
   - recevoir, via le premier ou le deuxième transducteur électroacoustique, un deuxième signal acoustique correspondant à une ou plusieurs réflexions du premier signal acoustique,
   - déterminer, en fonction de la distance (h), de l'angle ($\theta$), du premier signal acoustique émis et du deuxième signal acoustique reçu une vitesse d'écoulement du fluide,

   le dispositif étant adapté pour déterminer la célérité (C) du son dans le fluide et étant **caractérisé en ce que** le premier et le deuxième signal acoustique sont des signaux de type chirp émis selon une méthode de compression d'impulsion, et **en ce que** le dispositif comporte en outre :

   - des moyens pour déterminer une première vitesse d'écoulement ($V_{n-1}$) en fonction d'une valeur initiale de la célérité ($C_{n-1}$) égale à 340 m/s,
   - des moyens pour corriger des bandes de fréquence du deuxième signal acoustique en tenant compte de la valeur précédemment déterminée de la vitesse d'écoulement ($V_{n-1}$),
   - des moyens pour déterminer une nouvelle valeur de la vitesse d'écoulement ($V_n$) à partir de la détermination d'un temps de trajet dit aller ($T^+$) d'un signal acoustique émis entre le premier transducteur électroacoustique et le deuxième transducteur électroacoustique via une réflexion sur la surface et d'un temps de trajet dit retour ($T^-$) d'un signal acoustique émis entre le deuxième transducteur électroacoustique et le premier transducteur électroacoustique via une réflexion sur la surface,
   - des moyens pour déterminer une nouvelle valeur de la célérité ($C_n$) en fonction de la nouvelle valeur de la vitesse d'écoulement ($V_n$),
   - des moyens pour réitérer les corrections et les déterminations d'autres valeurs de vitesse d'écoulement ($V_{n+1}$) et de célérité ($C_{n+1}$), lorsque l'écart entre la nouvelle valeur de la célérité ($C_n$) et la valeur précédemment identifiée de la célérité ($C_{n-1}$) est supérieur à un seuil prédéfini.

2. Dispositif électronique selon la précédente revendication, chaque transducteur électroacoustique étant un capteur ultrasonique sans contact opérant dans une gamme de fréquence de 250 kHz à 650 kHz.

3. Dispositif électronique selon la précédente revendication, le dispositif électronique étant adapté pour :

- déterminer une vitesse (V) de l'écoulement du fluide selon la formule :

$$V = \frac{2h}{\sin(2\theta)}\left(\frac{1}{T^+} - \frac{1}{T^-}\right)$$

4. Dispositif électronique selon la précédente revendication, le dispositif électronique étant adapté pour déterminer la célérité (C) du son dans le fluide selon la formule :

$$C = \frac{h}{cos\theta}\left(\frac{1}{T^-} + \frac{1}{T^+}\right)$$

5. Procédé de détermination de la vitesse d'écoulement d'un fluide, le procédé étant exécuté par un dispositif électronique (200) selon l'une des revendications 1 à 4, le procédé comprenant les étapes de :

- émettre, via le premier transducteur électroacoustique, un premier signal acoustique,
- recevoir, via le premier ou le deuxième transducteur électroacoustique, un deuxième signal acoustique correspondant à une ou plusieurs réflexions du premier signal acoustique,
- déterminer, en fonction de la distance (h), de l'angle ($\theta$), du premier signal acoustique émis et du deuxième signal acoustique reçu une vitesse d'écoulement du fluide,

le procédé comprenant en outre les étapes de :

- déterminer une première vitesse d'écoulement ($V_{n-1}$) en fonction d'une valeur initiale de la célérité ($C_{n-1}$) égale à 340 m/s,
- corriger des bandes de fréquence du deuxième signal acoustique en tenant compte de la valeur précédemment déterminée de la vitesse d'écoulement ($V_{n-1}$),
- déterminer une nouvelle valeur de la vitesse d'écoulement ($V_n$) à partir de la détermination d'un temps de trajet dit aller ($T^+$) d'un signal acoustique émis entre le premier transducteur électroacoustique et le deuxième transducteur électroacoustique via une réflexion sur la surface et d'un temps de trajet dit retour ($T^-$) d'un signal acoustique émis entre le deuxième transducteur électroacoustique et le premier transducteur électroacoustique via une réflexion sur la surface,
- déterminer une nouvelle valeur de la célérité ($C_n$) en fonction de la nouvelle valeur de la vitesse d'écoulement ($V_n$),

- réitérer les corrections et les déterminations d'autres valeurs de vitesse d'écoulement ($V_{n+1}$) et de célérité ($C_{n+1}$), lorsque l'écart entre la nouvelle valeur de la célérité ($C_n$) et la valeur précédemment identifiée de la célérité ($C_{n-1}$) est supérieur à un seuil prédéfini.

6. Programme d'ordinateur, **caractérisé en ce qu'**il comprend des instructions qui conduisent le dispositif électronique (200) selon l'une des revendications 1 à 4 à mettre en oeuvre , par un processeur du dispositif électronique (200), un procédé de détermination d'une vitesse d'écoulement d'un fluide selon la revendication 5, lorsque le programme d'ordinateur est exécuté par le processeur.

7. Support d'enregistrement, lisible par un dispositif électronique (200) selon l'une des revendications 1 à 4, sur lequel est stocké le programme d'ordinateur selon la revendication précédente.

8. Aéronef comprenant un fuselage et un dispositif selon l'une quelconque des revendications 1 à 4 fixé au fuselage par un système de fixation.

**Patentansprüche**

1. Elektronische Vorrichtung (200) zur Messung einer Strömungsgeschwindigkeit (V) eines Fluids, wobei die elektronische Vorrichtung enthält:

- einen ersten elektroakustischen Wandler (E), der geeignet ist, ein akustisches Signal gemäß einer ersten mittleren Achse zu senden und/oder zu empfangen,
- einen zweiten elektroakustischen Wandler (R), der geeignet ist, ein akustisches Signal gemäß einer zweiten mittleren Achse zu senden und/oder zu empfangen, wobei die erste mittlere Achse und die zweite mittlere Achse eine Ebene parallel zur Richtung der zu messenden Strömung des Fluids eindeutig definieren,
- eine Fläche (203), die geeignet ist, ein akustisches Signal zu reflektieren, wobei die Fläche an einem Schnittpunkt (A) der ersten mittleren Achse und der zweiten mittleren Achse angeordnet ist, wobei jede Achse einen gleichen Winkel ($\theta$) mit der Geraden orthogonal zur Fläche bildet, die durch den Schnittpunkt verläuft, wobei jeder elektroakustische Wandler sich in einem gleichen Abstand (h) von der Fläche befindet,
- ein Steuermodul (205) der elektroakustischen Wandler,

wobei die elektronische Vorrichtung geeignet ist, eine freie Strömung des Fluids zwischen der Fläche und den zwei elektroakustischen Wandlern zu erlauben, wobei die elektronische Vorrichtung geeignet ist:

- über den ersten elektroakustischen Wandler ein erstes akustisches Signal zu senden,
- über den ersten oder den zweiten elektroakustischen Wandler ein zweites akustisches Signal zu empfangen, das einer oder mehreren Reflektionen des ersten akustischen Signals entspricht,
- abhängig vom Abstand (h), vom Winkel ($\Theta$), vom ersten gesendeten akustischen Signal und vom zweiten empfangenen akustischen Signal eine Strömungsgeschwindigkeit des Fluids zu bestimmen,

wobei die Vorrichtung geeignet ist, die Schallgeschwindigkeit (C) im Fluid zu bestimmen, und **dadurch gekennzeichnet ist, dass** das erste und das zweite akustische Signal Signale vom Typ Chirp sind, die gemäß einer Impulskompressionsmethode gesendet werden, und dass die Vorrichtung außerdem aufweist:

- Einrichtungen, um eine erste Strömungsgeschwindigkeit ($V_{n-1}$) abhängig von einem Ausgangswert der Schallgeschwindigkeit ($C_{n-1}$) gleich 340 m/s zu bestimmen,
- Einrichtungen, um Frequenzbänder des zweiten akustischen Signals unter Berücksichtigung des vorher bestimmten Werts der Strömungsgeschwindigkeit ($V_{n-1}$) zu korrigieren,
- Einrichtungen, um einen neuen Wert der Strömungsgeschwindigkeit ($V_n$) ausgehend von der Bestimmung einer so genannten Hinweg-Zeit ($T^+$) eines akustischen Signals, das zwischen dem ersten elektroakustischen Wandler und dem zweiten elektroakustischen Wandler mittels einer Reflektion auf der Fläche gesendet wird, und einer so genannten Rückweg-Zeit ($T^-$) eines akustischen Signals zu bestimmen, das zwischen dem zweiten elektroakustischen Wandler und dem ersten elektroakustischen Wandler mittels einer Reflektion auf der Fläche gesendet wird,
- Einrichtungen, um einen neuen Wert der Schallgeschwindigkeit ($C_n$) abhängig vom neuen Wert der Strömungsgeschwindigkeit ($V_n$) zu bestimmen,
- Einrichtungen, um die Korrekturen und die Bestimmungen anderer Strömungsgeschwindigkeits-($V_{n+1}$) und Schallgeschwindigkeitswerte ($C_{n+1}$) zu wiederholen, wenn die Abweichung zwischen dem neuen Wert der Schallgeschwindigkeit ($C_n$) und dem vorher erkannten Wert der Schallgeschwindigkeit ($C_{n-1}$) größer ist als eine vordefinierte Schwelle.

2. Elektronische Vorrichtung nach dem vorhergehenden Anspruch, wobei jeder elektroakustische Wandler ein berührungsloser Ultraschallsensor ist, der in einem Frequenzbereich von 250 kHz bis 650 kHz arbeitet.

3. Elektronische Vorrichtung nach dem vorhergehenden Anspruch, wobei die elektronische Vorrichtung geeignet ist:

- eine Strömungsgeschwindigkeit (V) des Fluids gemäß der Formel zu bestimmen:

$$V = \frac{2h}{sin(2\theta)}\left(\frac{1}{T^+} - \frac{1}{T^-}\right)$$

4. Elektronische Vorrichtung nach dem vorhergehenden Anspruch, wobei die elektronische Vorrichtung geeignet ist, die Schallgeschwindigkeit (C) im Fluid gemäß der Formel zu bestimmen:

$$C = \frac{h}{cos\theta}\left(\frac{1}{T^-} + \frac{1}{T^+}\right)$$

5. Verfahren zur Bestimmung der Strömungsgeschwindigkeit eines Fluids, wobei das Verfahren von einer elektronischen Vorrichtung (200) nach einem der Ansprüche 1 bis 4 ausgeführt wird, wobei das Verfahren die Schritte enthält:

- über den ersten elektroakustischen Wandler ein erstes akustisches Signal zu senden,
- über den ersten oder den zweiten elektroakustischen Wandler ein zweites akustisches Signal zu empfangen, das einer oder mehreren Reflektionen des ersten akustischen Signals entspricht,
- abhängig vom Abstand (h), vom Winkel ($\Theta$), vom ersten gesendeten akustischen Signal und vom zweiten empfangenen akustischen Signal eine Strömungsgeschwindigkeit des Fluids zu bestimmen,

wobei das Verfahren außerdem die Schritte enthält:

- eine erste Strömungsgeschwindigkeit ($V_{n-1}$) abhängig von einem Ausgangswert der Schallgeschwindigkeit ($C_{n-1}$) gleich 340 m/s zu bestimmen,
- Frequenzbänder des zweiten akustischen Signals unter Berücksichtigung des vorher bestimmten Werts der Strömungsgeschwindigkeit ($V_{n-1}$) zu korrigieren,
- einen neuen Wert der Strömungsgeschwindigkeit ($V_n$) ausgehend von der Bestimmung einer so genannten Hinweg-Zeit ($T^+$) eines akustischen Signals, das zwischen dem ersten elektroakustischen Wandler und dem zweiten elektroakustischen Wandler mittels einer Reflektion auf der Fläche gesendet wird, und einer so genannten Rückweg-Zeit ($T^-$) eines akustischen Signals zu bestimmen, das zwischen dem zweiten elektroakustischen Wandler und dem ersten elektroakustischen Wandler mittels einer Reflektion auf der Fläche gesendet wird,
- einen neuen Wert der Schallgeschwindigkeit ($C_n$) abhängig vom neuen Wert der Strömungsgeschwindigkeit ($V_n$) zu bestimmen,
- die Korrekturen und die Bestimmungen anderer Strömungsgeschwindigkeits- ($V_{n+1}$) und Schallgeschwindigkeitswerte ($C_{n+1}$) zu wiederholen, wenn die Abweichung zwischen dem neuen Wert der Schallgeschwindigkeit ($C_n$) und dem vorher erkannten Wert der Schallgeschwindigkeit ($C_{n-1}$) größer ist als eine vordefinierte Schwelle.

6. Computerprogramm, **dadurch gekennzeichnet, dass** es Anweisungen enthält, die die elektronische Vorrichtung (2)) nach einem der Ansprüche 1 bis 4 veranlassen, ein Verfahren zur Bestimmung einer Strömungsgeschwindigkeit eines Fluids nach Anspruch 5 durch einen Prozessor der elektronischen Vorrichtung (200) durchzuführen, wenn das Computerprogramm vom Prozessor ausgeführt wird.

7. Speicherträger, lesbar von einer elektronischen Vorrichtung (200) nach einem der Ansprüche 1 bis 4, auf dem das Computerprogramm nach dem vorhergehenden Anspruch gespeichert ist.

8. Luftfahrzeug, das einen Rumpf und eine Vorrichtung nach einem der Ansprüche 1 bis 4 enthält, die durch ein Befestigungssystem am Rumpf befestigt ist.

**Claims**

1. Electronic device (200) for measuring a flow velocity (V) of a fluid, the electronic device comprising:

- a first electroacoustic transducer (E), configured to transmit and/or receive an acoustic signal along a first central axis,
- a second electroacoustic transducer (R), configured to transmit and/or receive an acoustic signal along a second central axis, the first central axis and the second central axis uniquely defining a plane parallel to the direction of the flow of the fluid to be measured,
- a surface (203) configured to reflect an acoustic signal, the surface being placed at a point of intersection (A) of the first central axis and of the second central axis, each axis making the same angle ($\theta$) to the straight line orthogonal to the surface passing through the point of intersection, each electroacoustic transducer being located at the same distance (h) from the surface,
- a control module (205) for controlling the electroacoustic transducers,

the electronic device being configured to allow free flow of the fluid between the surface and the two electroacoustic transducers, the electronic device being configured to:

- transmit, via the first electroacoustic transducer, a first acoustic signal,
- receive, via the first or second electroacoustic transducer, a second acoustic signal corresponding to one or more reflections of the first acoustic signal,
- determine, depending on the distance (h), on the angle ($\Theta$), on the transmitted first acoustic signal and on the received second acoustic signal, a flow velocity of the fluid,

the device being configured to determine the speed (C) of sound in the fluid and being **characterized in that** the first and second acoustic signals are signals of chirp type transmitted using a pulse compression method, and **in that** the device further comprises:

- means for determining a first flow velocity ($V_{n-1}$) depending on an initial value of the speed ($C_{n-1}$) equal to 340 m/s,
- means for correcting frequency bands of the second acoustic signal taking into account the previously determined value of the flow velocity ($V_{n-1}$),
- means for determining a new value of the flow velocity ($V_n$) on the basis of determination of a trip time ($T^+$), referred to as the outward trip time, of an acoustic signal transmitted between the first electroacoustic transducer and the second electroacoustic transducer via a reflection from the surface, and of a trip time (T⁻), referred to as the return trip time, of an acoustic signal transmitted between the second electroacoustic transducer and the first electroacoustic transducer via a reflection from the surface,
- means for determining a new value of the speed ($C_n$) depending on the new value of the flow velocity ($V_n$),
- means for reiterating corrections and determinations of other values of the flow velocity ($V_{n+1}$) and speed ($C_{n+1}$), when the difference between the new value of the speed ($C_n$) and the previously identified value of the speed ($C_{n-1}$) is greater than a predefined threshold.

2. Electronic device according to the preceding claim, each electroacoustic transducer being a non-contact ultrasonic sensor operating in a frequency range of 250 kHz to 650 kHz.

3. Electronic device according to the preceding claim, the electronic device being configured to:

- determine a velocity (V) of flow of the fluid according to the formula:

$$V = \frac{2h}{sin(2\theta)}\left(\frac{1}{T^+} - \frac{1}{T^-}\right)$$

4. Electronic device according to the preceding claim, the electronic device being configured to determine the speed (C) of sound in the fluid according to the formula:

$$C = \frac{h}{cos\theta}\left(\frac{1}{T^-} + \frac{1}{T^+}\right)$$

5. Method for determining the flow velocity of a fluid, the method being executed by an electronic device (200) according to one of Claims 1 to 4, the method comprising the steps of:

- transmitting, via the first electroacoustic transducer, a first acoustic signal,
- receiving, via the first or second electroacoustic transducer, a second acoustic signal corresponding to one or more reflections of the first acoustic signal,
- determining, depending on the distance (h), on the angle (Θ), on the transmitted first acoustic signal and on the received second acoustic signal, a flow velocity of the fluid,

the method further comprising the steps of:

- determining a first flow velocity ($V_{n-1}$) depending on an initial value of the speed ($C_{n-1}$) equal to 340 m/s,
- correcting frequency bands of the second acoustic signal taking into account the previously determined value of the flow velocity ($V_{n-1}$),
- determining a new value of the flow velocity ($V_n$) on the basis of determination of a trip time ($T^+$), referred to as the outward trip time, of an acoustic signal transmitted between the first electroacoustic transducer and the second electroacoustic transducer via a reflection from the surface, and of a trip time ($T^-$), referred to as the return trip time, of an acoustic signal transmitted between the second electroacoustic transducer and the first electroacoustic transducer via a reflection from the surface,
- determining a new value of the speed ($C_n$) depending on the new value of the flow velocity ($V_n$),
- reiterating corrections and determinations of other values of the flow velocity ($V_{n+1}$) and speed ($C_{n+1}$), when the difference between the new value of the speed ($C_n$) and the previously identified value of the speed ($C_{n-1}$) is greater than a predefined threshold.

6. Computer program, **characterized in that** it comprises instructions that cause the electronic device (200) according to one of Claims 1 to 4 to implement, by means of a processor of the electronic device (200), a method for determining a flow velocity of a fluid according to Claim 5, when the computer programme is executed by the processor.

7. Recording medium, readable by an electronic device (200) according to one of Claims 1 to 4, on which the computer program according to the preceding claim is stored.

8. Aircraft comprising a fuselage and a device according to any one of Claims 1 to 4 fastened to the fuselage by a fastening system.

**Fig. 1**
**(art antérieur)**

**Fig. 2**

301
302
303

NCU — ADAPT. IMP. — FILT. PH

306
305
304

CAN — AMP. — FILT. PB

**Fig. 3**

300

400

401
402
403

CPU — MEM — NET

404
405
406

STCK — E — R

**Fig. 4**